# EUROPÄISCHE PATENTANMELDUNG

(11) **EP 2 329 963 A1**
(43) Veröffentlichungstag der Anmeldung: **08.06.2011**
(21) Anmeldenummer: 10015120.8
(22) Anmeldetag: 30.11.2010
(51) Int. Cl.: B60B 1/04, B60B 21/06, B62M 6/65

(54) **Rad für ein mit Muskelkraft betreibbares Fahrzeug und insbesondere für ein Fahrrad mit Hilfsmotor**

(30) Priorität: 04.12.2009 DE 102009056739
(71) Anmelder: DT Swiss AG, 2500 Biel/ Bienne 6 (CH)
(72) Erfinder: Walthert, Martin, 3270 Aarberg (CH); Maurer, Dominic, 4226 Breitenbach/SO (CH)
(74) Vertreter: Schütte, Hartmut

(57) **Zusammenfassung**

Rad (1) für ein mit Muskelkraft betreibbares Fahrzeug und insbesondere ein Fahrrad mit einem Hilfsmotor und mit einer Nabe (2), welche eine Nabenachse (3) und ein drehbar gegenüber der Nabenachse gelagertes Nabengehäuse (4) umfasst. Weiterhin weist das Rad eine Felge (5) mit einem Felgenboden (6) und einem Felgenbett (7) und Felgenflanken (8) auf. Die Felge ist über eine Vielzahl von Speicheneinrichtungen (9) mit der Nabe (2) verbunden. Die Speicheneinrichtungen (9) umfassen jeweils einen Speichennippel und eine Speiche. In dem Felgenboden (6) sind Durchtrittsöffnungen vorgesehen, durch welche die Speicheneinrichtungen (9) in die Felge (5) hineinragen. An der Nabe (2) ist ein elektrischer Antrieb (17) als Hilfsmotor (18) vorgesehen und ein Verhältnis des Außendurchmessers der Nabe zu dem Außendurchmesser der Felge ist größer als 1:5. Der freie Innendurchmesser einer Durchtrittsöffnung ist wenigstens 50% größer als ein Außendurchmesser der Speicheneinrichtung an der Durchtrittsöffnung.

## Beschreibung

Die Erfindung betrifft ein Rad für ein mit Muskelkraft betreibbares Fahrzeug, z. B. für ein Fahrrad mit einem Hilfsmotor. Insbesondere betrifft die Erfindung ein Rad mit einem Nabenantrieb für ein E-Bike, also ein Fahrrad mit einem elektrischen Hilfsantrieb, der es dem Benutzer ermöglicht, Strecken teilweise oder vollständig ohne den Einsatz von Muskelkraft mittels des elektrischen Antriebs zurückzulegen. Vorteilhafterweise ist das erfindungsgemäße Rad für ein sportliches Fahrrad vorgesehen, bei dem der Hilfsantrieb nur abschnittsweise und/oder unterstützend eingesetzt wird.

Im Bereich der Fahrradtechnik sind Fahrräder für den alltäglichen Gebrauch mit elektrischem Hilfsantrieb bekannt geworden, die es dem Benutzer ermöglichen, insgesamt oder an bestimmten Stellen während der Fahrstrecke den Hilfsantrieb zuzuschalten, um die Fahrt angenehmer bzw. weniger anstrengend zu gestalten.

Auch hochsportive Fahrräder werden heutzutage nicht nur für den Trainingseinsatz verwendet, sondern können z. B. auch für die Fahrt zur Arbeitsstätte eingesetzt werden.

Mit leichten und hoch qualitativen Fahrrädern kann der Benutzer regelmäßig auch erhebliche Distanzen zur Arbeitsstätte überbrücken. Ein elektrischer Hilfsantrieb erleichtert es dabei insbesondere auf den letzten Kilometern die körperliche Belastung des Fahrers zu reduzieren, sodass der Benutzer sein Ziel ausgeruht und nicht nass geschwitzt erreicht.

Ein weiterer Vorteil eines elektrischen Hilfsantriebs ist, dass bei starken Steigungen der Hilfsantrieb zugeschaltet werden kann und somit die maximale Belastung des Fahrers reduziert wird. All dies ermöglicht sowohl bei Trainingsfahrten als auch bei Fahrten zur Arbeitsstätte oder dergleichen dem Benutzer eine größere Reichweite, was zu einer häufigeren Verwendung des Fahrrades führt.

Im Bereich der E-Bikes können auch elektrische Antriebe in einer Nabe des Fahrrads eingesetzt werden. Solche Naben weisen einen erheblich größeren Außendurchmesser auf als herkömmliche Naben von Fahrrädern, da darin ja der elektrische Antrieb untergebracht werden muss. Da gleichzeitig der Außendurchmesser der Räder durch die Standardabmessungen vorgegeben ist, führt das dazu, dass der Kreuzungswinkel bzw. der Austrittswinkel der Speiche an dem Speichenloch an der Felge erheblich größer ist, als dies im Stand der Technik üblich ist.

Zwar werden oftmals Felgenösen mit kugelschalenförmigen Kontaktsitzen für die Speichennippel mit kugelförmigen Kontaktzonen eingesetzt, die eine leichte winkelmäßige Ausrichtung der Speiche zu dem Speichenloch erlauben, aber es hat sich herausgestellt, dass durch die hohe Speichenspannung bedingt sich die Speichennippel nahezu senkrecht zur Felge ausrichten, sodass der Verlauf der Speiche direkt am Austritt aus dem Speichennippel eine Knickstelle aufweist.

Diese Knickstellen führen zu einer erheblich erhöhten Bruchgefahr der Speichen. Bei günstigen Fahrrädern in einem Preissegment, bei dem starken Wettbewerb und ein hoher Preisdruck herrscht, kann beispielsweise durch ein dickeres Speichenmaterial der Bruchgefahr begegnet werden. Durch dickere Speichen steigt aber das Gesamtgewicht, das bei hoch qualitativen Fahrrädern nicht erwünscht ist. Außerdem erhöht sich die Schwungmasse beträchtlich, was schlechtere Fahreigenschaften bedingt.

Es ist deshalb die Aufgabe der vorliegenden Erfindung, ein Rad zur Verfügung zu stellen, welches für einen elektrischen Antrieb geeignet ist und bei dem auch bei sich kreuzenden Speichen ein Abknicken der Speichen zuverlässig vermieden wird.

Diese Aufgabe wird gelöst durch ein Rad mit den Merkmalen des Anspruchs 1. Bevorzugte Weiterbildungen der Erfindung sind Gegenstand der Unteransprüche. Weitere Vorteile und Merkmale der Erfindung ergeben sich aus dem Ausführungsbeispiel.

Das erfindungsgemäße Rad für ein wenigstens teilweise mit Muskelkraft betreibbares Fahrzeug und insbesondere ein Fahrrad umfasst einen Hilfsmotor und eine Nabe, welche eine Nabenachse und ein drehbar gegenüber der Nabenachse gelagertes Nabengehäuse aufweist. Weiterhin ist das Rad mit einer Felge versehen, die einen Felgenboden und ein Felgenbett sowie seitliche Felgenflanken aufweist. Die Felge ist über eine Vielzahl von Speicheneinrichtungen mit der Nabe verbunden. Wenigstens eine Speicheneinrichtung und insbesondere jede Speicheneinrichtung umfasst jeweils wenigstens einen Speichennippel und wenigstens eine Speiche. In dem Felgenboden sind erfindungsgemäß Durchtrittsöffnungen vorgesehen, durch welche die Speicheneinrichtungen in die Felge hineinragen. An der Nabe ist ein elektrischer Antrieb als Hilfsmotor vorgesehen. Ein Verhältnis des Außendurchmessers der Nabe zu dem Außendurchmesser der Felge ist größer als 1 : 5. Der freie Innendurchmesser wenigstens einer Durchtrittsöffnung in dem Felgenboden und insbesondere aller Durchtrittsöffnungen ist wenigstens 50 % größer als ein Außendurchmesser der Speicheneinrichtung an der Durchtrittsöffnung.

Das erfindungsgemäße Rad hat viele Vorteile. Ein erheblicher Vorteil des erfindungsgemäßen Rades besteht darin, dass das Rad für den Einsatz eines elektrischen Antriebes geeignet ist. Gleichzeitig wird durch die großdimensionierten Durchtrittsöffnungen ein erheblich größerer Speichenwinkel der sich kreuzenden Speichen ermöglicht, ohne dass eine Knickgefahr der Speichen besteht.

Vorzugsweise sind wenigstens einige Speichen in sich kreuzender Weise montiert.

Vorzugsweise sind die Speichennippel an der Felge angeordnet. Insbesondere sind sie innerhalb des Hohlkammerbereiches der Felge vorgesehen. Es ist möglich, dass die Speichen an einem Ende ein Gewinde zum Aufschrauben eines Speichennippels und an dem anderen Ende einen gebogenen Hakenbereich aufweisen, mit dem die Speichen beispielsweise an der Nabe eingehakt werden können. Möglich ist es aber auch, dass die Speichen an beiden Enden Speichennippel aufweisen, wobei dann ein Speichennippel an der Felge und ein Speichennippel an der Nabe befestigt werden. Möglich ist es auch, dass die Speichen an der Nabe umgelenkt werden, sodass an der Felge für eine Speiche zwei Speichennippel vorgesehen sind, die beide an der Felge befestigt sind, während die Speiche an der Nabe einmal umgelenkt wird. Die Speiche kann auch in die Nabe eingeschraubt sein.

In bevorzugten Ausgestaltungen ragt die Speiche durch das Durchtrittsloch. Der Speichendurchmesser beträgt insbesondere 1,8 oder 2 mm, während der Durchmesser der Durchtrittsöffnung etwa 4 bis 5 mm insbesondere etwa 4,5 mm beträgt. In einem konkreten Fall mit einer Durchtrittsöffnung von 4,5 mm und einem Speichendurchmesser beträgt das Verhältnis des Durchmessers der Durchtrittsöffnung zu dem Durchmesser der Speiche 2,25. Die Durchtrittsöffnung ist in diesem Fall 125 % größer als der Speichenaußendurchmesser.

Ein Verhältnis des Außendurchmessers der Nabe zu dem Außendurchmesser der Felge ist insbesondere größer als 1 : 4.

Insbesondere ist die Nabe als elektrisch antreibbarer Nabenmotor ausgeführt. Möglich ist dabei, dass der Antrieb das Rad vollständig oder teilweise mit der nötigen Antriebsenergie versorgt. Möglich ist es auch, dass der elektrische Antrieb beim Bremsen als Generator verwendet wird, um eine innerhalb der Nabe oder extern dazu vorgesehene Batterie wieder aufzuladen bzw. die beim Bremsen entstandene Energie zuzuführen.

Vorzugsweise ist eine Kontaktfläche'zwischen einer Speicheneinrichtung und der Felge ringförmig und insbesondere etwa linienförmig oder in Form eines schmalen Ringstreifens ausgebildet. Vorzugsweise ergibt eine schmale Linie einen Kontaktring. Die radiale Kontaktbreite ist vorzugsweise kleiner als 20 % des Außenradius der Kontaktfläche. Ein schmaler Kontaktring bietet den erheblichen Vorteil, dass der Winkel der Speiche zu der Durchtrittsöffnung in weiten Bereichen einstellbar ist. Wenn ein Speichennippel an der Felge und insbesondere innerhalb der Felge vorgesehen ist, dann durchdringt insbesondere nur die Speiche die Durchtrittsöffnung. Hier kann die Durchtrittsöffnung einfach als Speichenloch bezeichnet werden.

In bevorzugten Weiterbildungen ist der Speichennippel abgerundet und die Kontaktfläche der Durchtrittsöffnung an der inneren Anlagefläche des Felgenbodens flach ausgebildet. Der an der Kontaktfläche insbesondere konvex abgerundet ausgebildete Speichennippel kann an der im Kontaktbereich flach ausgebildeten Durchtrittsöffnung jeden Winkel innerhalb eines großen Winkelbereichs annehmen. Dies ist ein erheblicher Vorteil im Vergleich zum Stand der Technik, wo der Speichennippel durch die hohe Speichenspannung bedingt in die passend geformte Anlagefläche der Felgenöse hineingezogen wurde, wodurch sich der Speichennippel nahezu senkrecht zur Felge ausrichtet, was zu einer deutlichen Knickstelle im Austritt aus dem Speichennippel oder zu einer anschließenden Biegung der Speiche führen kann. Durch eine flache Ausgestaltung der Kontaktfläche im Bereich der Durchtrittsöffnung in Verbindung mit den entsprechenden Durchmesserverhältnissen kann eine optimale Ausrichtung der Speiche zur Felge gewährleistet werden.

In einer anderen bevorzugten Ausgestaltung ist der Speichennippel konvex abgerundet ausgebildet. Die Kontaktfläche an der Durchtrittsöffnung einer inneren Anlagefläche des Felgenbodens ist dann ebenfalls konvex abgerundet ausgebildet. Dadurch, dass beide in Kontakt geratenen Flächen konvex abgerundet sind, rollen die beiden Flächen praktisch gegeneinander bzw. aufeinander ab. Dadurch wird wiederum erzielt, dass nur ein schmaler und insbesondere ringförmiger Kontaktbereich vorliegt, der ein hohes Maß an flexibler Ausrichtung der Speiche in Bezug auf die Felge erlaubt.

Vorzugsweise ist in dem Felgenbett wenigstens eine Montageöffnung zum Einführen und/oder Spannen einer Speicheneinrichtung vorgesehen. Insbesondere ist für jede Durchtrittsöffnung eine entsprechende Montageöffnung in dem Felgenbett vorgesehen, sodass von außen ein Werkzeug zum Spannen des Speichennippels in den Hohlkammerbereich der Felge eingeführt werden kann.

Vorzugsweise können die Durchtrittsöffnung und die Montageöffnung angepasst zueinander ausgerichtet sein. Insbesondere sind die Durchtrittsöffnung und die zugehörige Montageöffnung schräg zu einem Radius des Rades angeordnet. Dabei können die Durchtrittsöffnung und die zugehörige Montageöffnung fluchtend zu der zugehörigen Speicheneinrichtung ausgerichtet sein. Schräg zu einem Radius und etwa fluchtend zueinander angeordnete Durchtrittsöffnungen und Montageöffnungen erleichtern insbesondere bei großen Speichenaustrittswinkeln aus der Felge eine einfache und zuverlässige Montage, die bei der herkömmlichen radialen Anordnung der Durchtrittsöffnungen und der Montageöffnungen nicht immer gewährleistet werden kann, da sich der Werkzeugbereich des Speichennippels schon wieder radial unterhalb des Felgenbettes befinden kann. Dann können die Montage- und Durchtrittsöffnungen leicht oval oder elliptisch ausgebildet sein.

In bevorzugten Ausgestaltungen beträgt wenigstens ein Speichenwinkel mehr als 7,5 Grad und insbesondere mehr als 10 Grad. In konkreten Ausgestaltungen kann der Winkel auch 12 Grad oder mehr betragen.

Vorteilhafterweise sind die Speichennippel vollständig innerhalb der Felge oder doch nahezu vollständig zwischen dem Felgenboden und dem Felgenbett angeordnet.

Das Nabengehäuse weist insbesondere eine Nabenhülse auf, die mit Nabenflanschen zur Befestigung der Speichen versehen ist. Das Verhältnis des Außendurchmessers der Nabenhülse zu dem Außendurchmesser der Felge beträgt insbesondere mehr als 1:6 und vorzugsweise mehr als 1:4. Das Verhältnis des Außendurchmessers der Nabenhülse zu dem Außendurchmesser der Felge kann auch größer als 1:3 sein und sogar 1:2 oder mehr betragen.

In allen Ausgestaltungen ist die Durchtrittsöffnung vorzugsweise an einer fest mit der Felge verbundenen Felgenöse vorgesehen. Während die Felge zum Beispiel aus einem Leichtmetall, wie Aluminium oder Magnesium oder deren Legierungen bestehen kann, besteht die Felgenöse vorzugsweise aus einem festeren Material, wie beispielsweise Stahl. In allen Ausgestaltungen ist das Rad insbesondere als Hinterrad vorgesehen und kann einen Rotor zur Anordnung wenigstens eines Ritzels oder eines Ritzelpaketes und/oder eine Scheibenbremse aufweisen.

Weitere Vorteile und Merkmale der vorliegenden Erfindung ergeben sich aus dem Ausführungsbeispiel, das mit Bezug auf die beiliegenden Figuren im Folgenden beschrieben wird.

Darin zeigen:
- Fig. 1: eine Seitenansicht eines erfindungsgemäßen Rades;
- Fig. 2: eine Vorderansicht des Rades nach Figur 1;
- Fig. 3: einen schematisch dargestellten Querschnitt A - A des Rades nach Figur 1;
- Fig. 4: einen schematisch vergrößerten Querschnitt eines Abschnitts der Felge;
- Fig. 5: das Detail C aus Figur 4 in nochmals vergrößerter Darstellung;
- Fig. 6: ein herkömmliches Rad aus dem Stand der Technik; und
- Fig. 7: eine herkömmliche Speicheneinrichtung bei großem Speichenwinkel.

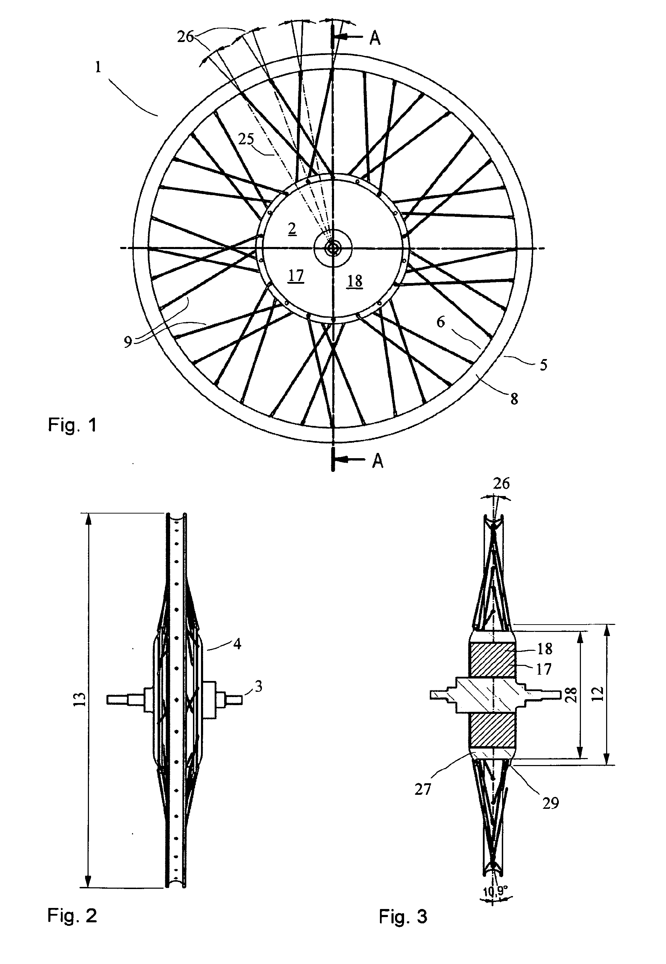

In den Figuren 1-5 ist ein Ausführungsbeispiel der vorliegenden Erfindung dargestellt.

In Figur 1 ist in ein erfindungsgemäßes Rad 1 in einer Seitenansicht dargestellt.

Das Rad 1 verfügt über eine Nabe 2 die über einen elektrischen Antrieb 17 verfügt, bzw. einen Nabenmotor 18 umfasst, der in die Nabe 2 integriert ist.

Die Nabe 2 wird in der Speicheneinrichtung 9 mit der Felge 5 verbunden. Die Speichenwinkel 26 der Speichen 11 zu dem jeweiligen Radius 25 senkrecht zur Felge beträgt hier im Ausführungsbeispiel innerhalb der Ebene des Rades etwa 12° .

Deutlich erkennbar ist der erheblich vergrößerte Außendurchmesser 12 der Nabe 2 (vgl. auch Figur 3). Das Verhältnis des Außendurchmessers 12 der Nabe 2 zu dem Außendurchmesser 13 der Felge 5 ist größer als 1:6 und insbesondere größer als 1:5 und hier sogar größer als 1:4 und in diesem Fall sogar 1:3. In anderen Ausgestaltungen kann das Verhältnis auch 1:2 erreichen oder noch größer als dieser Wert werden.

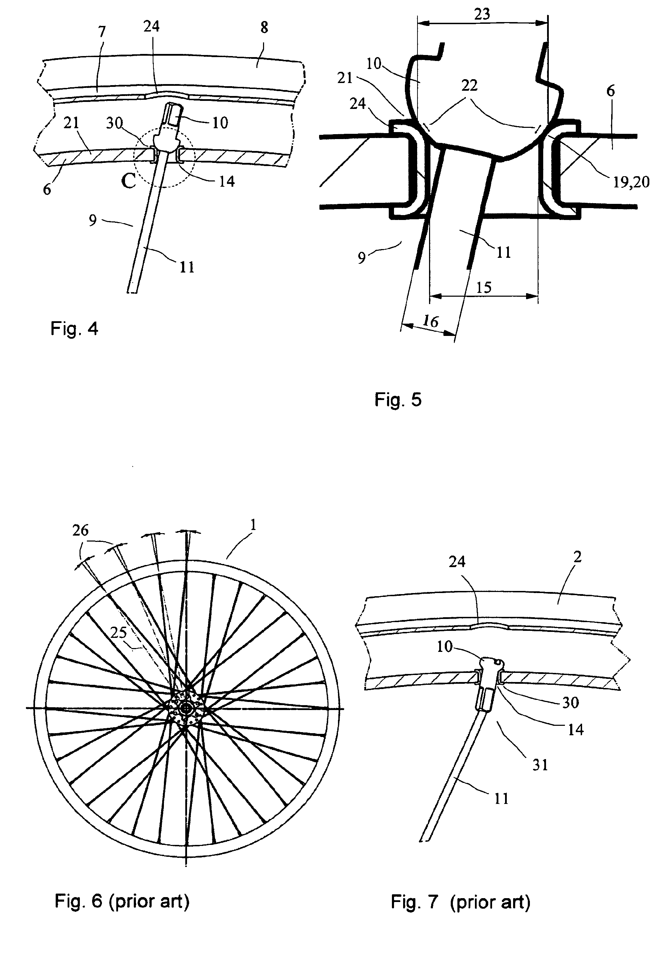

Beim herkömmlichen Rad 1 aus dem Stand der Technik (vgl. Figur 6) ist das Verhältnis typischerweise größer als 1:8 und kann sogar Werte von 1:10 oder dergleichen erreichen.

Der deutlich größere Nabenaußendurchmesser 12 der Nabe 2 des erfindungsgemäßen Rades 1 gemäß den Figuren 1-5 wird benötigt, da in die Nabe 2 der elektrische Antrieb 17 integriert ist, der insbesondere als Nabenmotor 18 ausgeführt ist.

Der dafür benötigte Bauraum führt zu einem größeren Außendurchmesser und somit zu einem größeren Speichenwinkel, der zur Drehmomentübertragung gekreuzt angeordneten Speichen 11.

Typischerweise sind die Speichen 11 an Nabenflanschen 29 angeordnet, die sich radial nach außen von der Nabenhülse 27 der Nabe 2 aus erstrecken. Bei dem erfindungsgemäßen Rad ist auch der Außendurchmesser 28 der Nabenhülse 27 erheblich größer, als es im Stand der Technik üblich ist. Nabenhülsenaußendurchmesser 28 von 15, 20 oder 25 cm können üblich sein. Auch das Verhältnis des Außendurchmessers 28 der Nabenhülse 27 zu dem Außendurchmesser 13 der Felge 5 ist größer als 1:6 und insbesondere auch größer als 1:4 4 und kann sogar größer sein als 1:3.

In der Figur 4 ist in einer vergrößerten Ansicht die Einbausituation einer Speicheneinrichtung 9 mit einer Speiche 11 und einem im Hohlkammerbereich zwischen dem Felgenboden 6 und dem Felgenbett 7 angeordneten Speichennippel 10 dargestellt.

Die Durchtrittsöffnung 14 ist an einer Felgenöse 30 vorgesehen, die in ein entsprechendes Loch im Felgenboden 6 eingesetzt ist. Während die Felge insgesamt aus einem relativ leichten Material und insbesondere Leichtmetall besteht, besteht die Felgenöse aus einem festen Material wie beispielsweise Stahl. Es ist auch möglich, dass die Felge aus einem Faserverbundmaterial besteht.

Wie insbesondere der Figur 5 zu entnehmen ist, die eine vergrößerte Darstellung der Durchtrittsöffnung 14 an dem Felgenboden 6 zeigt, ist der freie Innendurchmesser 15 der Durchtrittsöffnung 14 erheblich größer als der Außendurchmesser 16 der Speicheneinrichtung in dem Bereich der Durchtrittsöffnung 14. Insbesondere ist der freie Innendurchmesser 15 der Durchtrittsöffnung 14 um mehr als 50% größer als der Außendurchmesser 16 der Speiche 11, die aufgrund der dargestellten Anordnung hier den relevanten Außendurchmesser im Bereich der Durchtrittsöffnung darstellt. Bei der dargestellten Anordnung wird der Speichennippel mit einem Nippelkopf 32 auf das Ende der Speiche aufgeschraubt, sodass der konvex abgerundete Nippelkopf an der Kontaktfläche 19 der Felgenöse 30 anliegt, während nur die Speiche 11 der Speicheneinrichtung 9 durch das Durchtrittsloch 14 hindurch ragt.

Die Felgenöse 30 weist eine Kontaktfläche 19 auf, die als ringförmige Kontaktfläche 20 ausgestaltet ist. Die ringförmige Kontaktfläche 20 weist nur eine sehr geringe Kontaktbreite 22 auf, die in Kontakt mit dem Speichennippel 10 steht. Die Kontaktbreite 22 zwischen dem Speichennippel 11 und der Felgenöse 30 beträgt weniger als 20 % des Außendurchmessers 23 der Kontaktbreite. Dadurch entsteht ein sehr schmaler Kontaktring 20, wodurch eine in weiten Bereichen flexible und winkelmäßige Ausrichtung der Speicheneinrichtung 9 zu der Felgenöse 30 bzw. zu der Durchtrittsöffnung 14 erlaubt wird. Dadurch wird eine erheblich höhere Stabilität und Haltbarkeit des erfindungsgemäßen Rades 1 ermöglicht, obwohl die Nabe einen großen Außendurchmesser aufweist und die Speichen unter erheblich größeren Speichenwinkeln geneigt angeordnet sind.

Im Unterschied, zu dem in den Figuren 1 bis 5 dargestellten erfindungsgemäßen Rad 1 weist, das Rad 1 gemäß dem Stand der Technik (Figur 6) erheblich geringere Speichenwinkel 26 auf, die hier zwischen etwa 5 und 6° liegen. Der Speichenlochdurchmesser beträgt hier weniger als 75 mm.

Figur 7 zeigt eine herkömmliche Speicheneinrichtung 9, bei der der Speichennippel 10 mit seinem Nippelkörper 33 durch die Durchtrittsöffnung 14 der Felge hindurch ragt. Es liegt ein großer Winkel der Speiche 11 zur radialen Ausrichtung vor.

Das bewirkt eine Knickstelle 31 am Austritt der Speiche 11 aus dem Speichennippel 10, da aufgrund der hohen Speichenspannung der Speichennippel 10 an seinem Sitz in die Felgenöse hineingezogen wird. Eine solche Knickstelle 31 sorgt für eine erheblich verringerte Lebensdauer und für eine deutlich höhere Bruchgefahr der Speiche 11.

Insgesamt erlaubt die Erfindung erheblich größere Speichenwinkel an Rädern und den Einsatz von großen Naben mit großen Nabenaußendurchmessern für elektrisch unterstützte Räder, die wenigstens teilweise mit Muskelkraft betreibbar sind.

### Bezugszeichenliste:

- 1: Rad
- 2: Nabe
- 3: Nabenachse
- 4: Nabengehäuse
- 5: Felge
- 6: Felgenboden
- 7: Felgenbett
- 8: Felgenflanken
- 9: Speicheneinrichtung
- 10: Speichennippel
- 11: Speiche
- 12: Außendurchmesser
- 13: Außendurchmesser
- 14: Durchtrittsöffnung
- 15: Innendurchmesser
- 16: Außendurchmesser
- 17: elektrischer Antrieb
- 18: Nabenmotor
- 19: Kontaktfläche
- 20: ringförmige Kontaktfläche
- 21: Anlagefläche
- 22: Kontaktbreite
- 23: Außenradius
- 24: Montageöffnung
- 25: Radius
- 26: Speichenwinkel
- 27: Nabenhülse
- 28: Außendurchmesser
- 29: Nabenflansch
- 30: Felgenöse
- 31: Knickstelle
- 32: Nippelkopf
- 33: Nippelkörper

## Patentansprüche

1. Rad (1) für ein wenigstens teilweise mit Muskelkraft betreibbares Fahrzeug und insbesondere ein Fahrrad,
mit wenigstens einem Hilfsmotor und mit einer Nabe (2), welche eine Nabenachse (3) und ein drehbar gegenüber der Nabenachse (3) gelagertes Nabengehäuse (4) umfasst,
sowie mit einer Felge (5) mit einem Felgenboden (6) und einem Felgenbett (7) und Felgenflanken (8), wobei die Felge (5) über eine Vielzahl von Speicheneinrichtungen (9) mit der Nabe (2) verbunden ist, wobei wenigstens eine Speicheneinrichtung (9) wenigstens einen Speichennippel (10) und eine Speiche (11) umfasst,
**dadurch gekennzeichnet,**
**dass** an der Nabe ein elektrischer Antrieb (17) als Hilfsmotor vorgesehen ist, und ein Verhältnis des Außendurchmessers (12) der Nabe (2) zu dem Außendurchmesser (13) der Felge (5) größer als 1:5 beträgt, wobei in dem Felgenboden (6) Durchtrittsöffnungen (14) vorgesehen sind, durch welche die Speicheneinrichtungen (9) in die Felge (5) hineinragen und dass der freie Innendurchmesser (15) wenigstens einer Durchtrittsöffnung (14) in dem Felgenboden (6) wenigstens 50% größer ist als ein Außendurchmesser (16) der Speicheneinrichtung (9) an der Durchtrittsöffnung (14).

2. Rad (1) nach Anspruch 1, wobei das in Verhältnis des Außendurchmessers (12) der Nabe (2) zu dem Außendurchmesser (13) der Felge (5) größer als 1:4 beträgt.

3. Rad (1) nach Anspruch 1 oder 2, wobei die Nabe (2) als elektrisch antreibbarer Nabenmotor (18) ausgeführt ist.

4. Rad (1) nach Anspruch 1, 2 oder 3, wobei wenigstens einige Speichen (11) in sich kreuzender Weise montiert sind.

5. Rad (1) nach einem der vorhergehenden Ansprüche, wobei die Kontaktfläche (19) zwischen einer Speicheneinrichtung (9) und der Felge (5) linienförmig und insbesondere ringförmig (20) ausgebildet ist, wobei insbesondere eine radiale Ringbreite (22) kleiner als 20% des Ringdurchmessers (23) der Kontaktfläche (19) beträgt.

6. Rad (1) nach einem der vorhergehenden Ansprüche, wobei der Speichennippel (10) abgerundet und die Kontaktfläche (19) der Durchtrittsöffnung (14) an der inneren Anlagefläche (21) des Felgenbodens (6) flach ausgebildet ist.

7. Rad (1) nach einem der vorhergehenden Ansprüche, wobei der Speichennippel (10) konvex abgerundet ausgebildet und die Kontaktfläche (19) an der Durchtrittsöffnung (14) an der inneren Anlagefläche (21) des Felgenbodens (6) ebenfalls konvex abgerundet ausgebildet ist.

8. Rad (1) nach einem der vorhergehenden Ansprüche, wobei in dem Felgenbett (7) wenigstens eine Montageöffnung (24) zum Einführen und/oder Spannen einer Speicheneinrichtung (9) vorgesehen ist.

9. Rad (1) nach einem der vorhergehenden Ansprüche, wobei die Durchtrittsöffnung (14) und die Montageöffnung (24) schräg zu einem Radius (25) des Rades (1) angeordnet sind, wobei insbesondere die Durchtrittsöffnung (14) und die Montageöffnung (24) fluchtend zu der zugehörigen Speicheneinrichtung (9) ausgerichtet sind.

10. Rad (1) nach einem der vorhergehenden Ansprüche, wobei wenigstens ein Speichenwinkel (26) größer als 7,5° und insbesondere größer als 10° beträgt.

11. Rad (1) nach einem der vorhergehenden Ansprüche, wobei die Speichennippel (10) vollständig innerhalb der Felge (5) zwischen dem Felgenboden (6) und dem Felgenbett (7) angeordnet sind.

12. Rad (1) nach einem der vorhergehenden Ansprüche, wobei das Nabengehäuse (10) eine Nabenhülse (27) mit Nabenflanschen (28) zur Befestigung der Speichen (11) aufweist.

13. Rad (1) nach einem der vorhergehenden Ansprüche, wobei das Verhältnis des Außendurchmessers (28) der Nabenhülse (27) zu dem Außendurchmesser (13) der Felge (5) weniger als 1:6 und insbesondere weniger als 1:4 beträgt.

14. Rad (1) nach einem der vorhergehenden Ansprüche, wobei die Durchtrittsöffnung (14) an einer fest mit der Felge verbundenen Felgenöse (30) vorgesehen ist.

15. Rad (1) nach einem der vorhergehenden Ansprüche, wobei ein Rotor (31) zur Anordnung wenigstens eines Ritzels oder eines Ritzelpaketes und/oder eine Scheibenbremse (32) vorgesehen ist.
